# EUROPEAN PATENT SPECIFICATION

(11) **EP 3 725 649 B1**
(45) Date of publication and mention of the grant of the patent: **08.02.2023**
(21) Application number: 18888207.0
(22) Date of filing: 10.12.2018
(51) Int. Cl.: B62D 25/02, B62D 25/20, B62D 21/15, B60K 1/04, B62D 27/02, B62D 27/06, B62D 29/00

(54) **ROCKER BEAM ASSEMBLY, SIDE REAR BODY ASSEMBLY, BODY ASSEMBLY, VEHICLE AND CONNECTING METHOD**
TÜRSCHWELLENANORDNUNG, SEITENHECKANORDNUNG, KAROSSERIEAUFBAU, KRAFTFAHRZEUG UND VERBINGUNGSVERFAHREN
ENSEMBLE LONGERON DE SEUIL, ENSEMBLE CORPS ARRIÈRE LATÉRAL, ENSEMBLE CORPS, VÉHICULE AUTOMOBILE ET MÉTHODE DE CONNEXION

(30) Priority: 13.12.2017 CN 201711328423
(43) Date of publication of application: 21.10.2020
(73) Proprietor: NIO (Anhui) Holding Co., Ltd, Hefei City, Anhui Province (CN)
(72) Inventor: SHEN, Xuekai, Hong Kong (CN); CHENG, Ming, Hong Kong (CN); YANG, Chuanyi, Hong Kong (CN); LI, Shuo, Hong Kong (CN); JING, Haitao, Hong Kong (CN); ZHENG, Wang, Hong Kong (CN); QIN, Le, Hong Kong (CN)
(74) Representative: SSM Sandmair
(86) International application number: PCT/CN2018/120109
(87) International publication number: WO 2019/114663

(56) References cited:
- CN-A- 106 114 180
- CN-U- 203 902 697
- CN-U- 208 119 277
- DE-A1-102013 001 945
- DE-A1-102014 108 961
- DE-B3-102012 020 432
- DE-B3-102014 200 598
- JP-A- 2008 247 062
- US-A- 5 259 660

## Description

### Technical Field

The invention relates to the field of vehicle body structures. More specifically, the invention relates to a rocker beam and rear longitudinal rail assembly specially connected at the side rear of the vehicle body, a vehicle body assembly having the same, and a vehicle.

### Background Art

Vehicle bodies in white of existing vehicles are mainly composed of steel plates, and a rear longitudinal rail is connected to a rocker beam mainly by means of spot welding, fusion welding, etc. between the steel plates. Due to the demand for lightweight vehicle bodies, more vehicles use aluminium alloy vehicle bodies. For the connection in the aluminium alloy vehicle bodies, it is necessary to ensure sufficient connection strength. In addition, for the connection of aluminium alloy components, thermal processing such as welding will generate a heat-affected zone, which affects the stability of the connection.

DE102014108961A1 discloses all the features of the preamble of claim 1, in that it shows a rocker end plate attached to at least one of a rocker, a real rail or an outer stamping for a vehicle rear rail. The rocker may be an extrusion. The rocker 12 may have an open end 9, for example. The rocker 12 may have an end face 11 to which the end plate 14 may be attached. The rocker may include a first side wall 10 and opposite second side wall 24 and opposite top wall 26 which may include a first segment 26a and a second segment 26b, which may be joined together at an obtuse angle. The rocker 12 may include an internal support beam or wall 25, which may extend from the first side wall 20 to the opposite second side wall 22.

### Summary of the Invention

An object of the invention is to solve or at least alleviate the problems existing in the prior art.

According to some of the features, an object of the invention is to ensure the rear impact and side impact performances, and sufficient bending stiffness and torsional stiffness of the vehicle, to improve the reliability and safety of the whole vehicle.

According to some of the features, an object of the invention is to provide a simple and convenient method for assembling a rocker beam with a further component such as a rear longitudinal rail.

According to one aspect, provided is a rocker beam assembly, comprising a rocker beam and a reinforcement plate, wherein the rocker beam is an extruded member, which comprises a side wall defining an accommodating cavity, and two open ends; the reinforcement plate is inserted into the accommodating cavity of the rocker beam from either of the two open ends; the reinforcement plate comprises a first connecting face connected to an inner side of the side wall of the rocker beam, and a second connecting face used for connecting to a further component; and nuts are mounted on the second connecting face, and the side wall of the rocker beam is provided with a plurality of apertures positioned corresponding to the nuts.

Optionally, in the rocker beam assembly described above, the reinforcement plate comprises the first connecting face and the second connecting face formed at an angle.

Optionally, in the rocker beam assembly described above, the first connecting face and the second connecting face of the reinforcement plate are perpendicular to each other.

Optionally, in the rocker beam assembly described above, the side wall of the rocker beam comprises a bottom wall, a top wall, a front wall and a rear wall, the first connecting face of the reinforcement plate is connected to the bottom wall of the rocker beam, and the plurality of apertures are provided in the front wall of the rocker beam.

Optionally, in the rocker beam assembly described above, the first connecting face of the reinforcement plate is connected to the bottom wall of the rocker beam by means of blind riveting.

Optionally, in the rocker beam assembly described above, a plurality of nuts are connected to the second connecting face of the reinforcement plate in a press-riveting manner.

Optionally, in the rocker beam assembly described above, an additional nut is further connected to the front wall of the rocker beam in a blind riveting manner.

Optionally, in the rocker beam assembly described above, the rocker beam further comprises a plurality of staggered rib walls in the accommodating cavity.

According to some aspects, provided is a side rear vehicle body assembly, comprising a rocker beam and a rear longitudinal rail, wherein the rocker beam is an extruded member, which comprises a side wall defining an accommodating cavity, and two open ends; a reinforcement plate is inserted into the accommodating cavity of the rocker beam from the open end; the reinforcement plate comprises a first connecting face connected to an inner side of the side wall of the rocker beam, and a second connecting face connected to the rear longitudinal rail; and the rear longitudinal rail comprises a connecting end, and a plurality of bolts pass through through-holes of the connecting end of the rear longitudinal rail and apertures in the side wall of the rocker beam, and are received by nuts mounted on the second connecting face of the reinforcement plate.

Optionally, in the side rear vehicle body assembly described above, the reinforcement plate comprises the first connecting face and the second connecting face perpendicular to each other.

Optionally, in the side rear vehicle body assembly described above, the side wall of the rocker beam comprises a bottom wall, a top wall, a front wall and a rear wall, the first connecting face of the reinforcement plate is connected to the bottom wall of the rocker beam, and the plurality of bolts pass through the front wall of the rocker beam and are received by the nuts on the second connecting face of the reinforcement plate.

Optionally, in the side rear vehicle body assembly described above, the first connecting face of the reinforcement plate is connected to the bottom wall of the rocker beam by means of blind riveting.

Optionally, in the side rear vehicle body assembly described above, a plurality of nuts are connected to the second connecting face of the reinforcement plate in a press-riveting manner.

Optionally, in the side rear vehicle body assembly described above, an additional nut is further connected to the front wall of the rocker beam in a blind riveting manner, and the additional bolt passes through an additional through-hole of the connecting end of the rear longitudinal rail and is received by an additional nut on the front wall.

Optionally, in the side rear vehicle body assembly described above, an overlapping position is further provided between the rocker beam and the rear longitudinal rail, and the rocker beam and the rear longitudinal rail are reinforced by means of a self-tapping rivet at the overlapping position.

Optionally, in the side rear vehicle body assembly described above, the rocker beam further comprises a plurality of staggered rib walls in the accommodating cavity.

Optionally, in the side rear vehicle body assembly described above, the rear longitudinal rail is a cast member, and the through-hole in the connecting end of the rear longitudinal rail is formed during casting.

Optionally, in the side rear vehicle body assembly described above, the rocker beam, the rear longitudinal rail and the reinforcement plate are all made of an aluminium alloy.

In another aspect, provided is a vehicle body assembly, comprising a side rear vehicle body assembly according to various embodiments.

In another aspect, provided is a vehicle, comprising a vehicle body assembly according to various embodiments.

In another aspect, provided is a method for connecting a rocker beam to a rear longitudinal rail, the method comprising:
providing a reinforcement plate, the reinforcement plate comprising a first connecting face configured to be connected to an inner side of a side wall of the rocker beam, and a second connecting face configured to be connected to the rear longitudinal rail, and nuts being mounted on the second connecting face of the reinforcement plate;
inserting the reinforcement plate from an open end of the rocker beam into an accommodating cavity of the rocker beam, the rocker beam being an extruded part, which comprises the side wall defining the accommodating cavity and two open ends;
connecting the first connecting face of the reinforcement plate to the inner side of the side wall of the rocker beam; and
a plurality of bolts passing through through-holes of a connecting end of the rear longitudinal rail and apertures in the side wall of the rocker beam, and being screwed into nuts mounted on the second connecting face of the reinforcement plate.

Optionally, in the method, the side wall of the rocker beam comprises a bottom wall, a top wall, a front wall and a rear wall, and the method further comprises connecting the first connecting face of the reinforcement plate to the bottom wall of the rocker beam, and the plurality of bolts passing through the front wall of the rocker beam and being screwed into the nuts on the second connecting face of the reinforcement plate.

Optionally, in the method, the method comprises connecting the first connecting face of the reinforcement plate to the bottom wall of the rocker beam by means of blind riveting.

Optionally, in the method, the method comprises connecting a plurality of nuts to the second connecting face of the reinforcement plate by means of press-riveting.

Optionally, in the method, the method comprises connecting an additional nut to the front wall of the rocker beam in a blind riveting manner, and the additional bolt passing through an additional through-hole of the connecting end of the rear longitudinal rail and being screwed into an additional nut on the front wall.

Optionally, in the method, the method comprises: reinforcing the rocker beam and the rear longitudinal rail at an overlapping position therebetween by means of a self-tapping rivet.

The connection between the rear longitudinal rail and the rocker beam in the side rear vehicle body assembly according to invention is reliable to ensure the rear impact and side impact performances, and sufficient bending stiffness and torsional stiffness of the vehicle, to improve the reliability and safety of the whole vehicle.

### Brief Description of the Drawing

The disclosure of the invention will become more readily understood with reference to the accompanying drawing. Those skilled in the art will readily appreciate that the accompanying drawing is merely for illustrative purposes and is not intended to limit the scope of protection of the invention. In addition, like components are indicated by like numbers in the figure, in which:

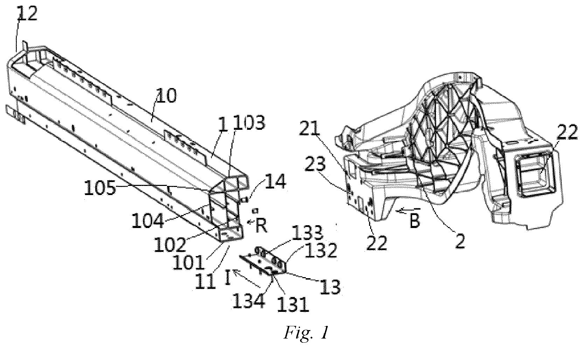

Fig. 1 shows an exploded view of a side rear vehicle body assembly according to the invention.

### Detailed Description of Embodiments

It can be readily understood that according to the technical solution of the invention, a person of ordinary skill in the art may propose multiple interchangeable structures and implementations without changing the essential spirit of the invention. Therefore, the following specific implementations and the accompanying drawing are merely exemplary descriptions of the technical solution of the invention, and should not be construed as the entirety of the invention or construed as limiting the technical solution of the invention.

Directional terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different conditions in use. Therefore, these or other orientation terms should not be construed as restrictive terms as well.

Fig. 1 shows a side rear vehicle body assembly according to the invention, comprising a rocker beam assembly and a rear longitudinal rail 2. The rocker beam assembly further comprises a rocker beam 1 and a reinforcement plate 13. The rocker beam 1 is located substantially under a door frame; and the rear longitudinal rail is located behind the rocker beam 1, substantially on the side of a trunk, and is connected between the rocker beam 1 and a rear bumper beam (not shown). In an embodiment of the invention, the rocker beam 1 is an extruded part, which comprises a side wall 10 defining an accommodating cavity, and two open ends 11, 12. The reinforcement plate 13 is arranged in the accommodating cavity of the rocker beam 1. Specifically, the reinforcement plate 13 is inserted in the direction of I into the accommodating cavity defined by the side wall 10 of the rocker beam 1 from the open end 11 of the rocker beam 1. The reinforcement plate 13 comprises a first connecting face 131 connected to an inner side of the side wall 10 of the rocker beam 1, and a second connecting face 132 connected to the rear longitudinal rail. The rear longitudinal rail 2 comprises a connecting end 21, and a plurality of bolts pass through through-holes 22 of the connecting end 21 of the rear longitudinal rail and apertures in the side wall 10 of the rocker beam, and are received by nuts 133 mounted on the second connecting face 132 of the reinforcement plate 13, thereby connecting the rocker beam 1 and the rear longitudinal rail 2 together. Although the connection between the rocker beam assembly and the rear longitudinal rail 2 is taken as an example in each illustrated embodiment, the same approach can be used between the rocker beam assembly and a further component, for example, the rocker beam may be connected to an energy absorption box via the reinforcement plate at the other end 12.

The rocker beam 1 may be an extruded member, which is formed by an extrusion processing process, and has a side wall 10 and two open ends 11, 12. In some embodiments, the rocker beam 1 may be an aluminium alloy extruded member. In some embodiments, the side wall 10 is composed of a bottom wall 101, a front side wall 102, a top wall 103, and a rear wall 104. The bottom wall 101, the front side wall 102, the top wall 103, and the rear wall 104 jointly define an accommodating cavity. In some embodiments, the rocker beam 1 may be provided with one or more rib walls 105 between the side walls, and the rib walls 105 may be oriented in any direction, for example, the rib walls 105 may be parallel to the side walls, such as horizontal rib walls parallel to the bottom wall 101 and vertical rib walls parallel to the front wall 102. In some embodiments, as shown, the rib walls 105 may comprise a plurality of staggered rib walls. The plurality of staggered rib walls further divide the accommodating cavity defined by the side walls 10 into a plurality of small accommodating cavities. In this case, the reinforcement plate should be inserted into the small accommodating cavity close to the top or bottom wall to facilitate the installation thereof. The staggered rib walls 105 can enhance the strength of the rocker beam 1.

In some embodiments, the reinforcement plate 13 comprises a first connecting face 131 and a second connecting face 132 formed at an angle. For example, the reinforcement plate 13 may be formed by means of bending. In some embodiments, the first connecting face 131 and the second connecting face 132 are perpendicular to each other. In some embodiments, the reinforcement plate 13 is arranged in the accommodating cavity of the rocker beam 1, more specifically, for example, in the bottom accommodating cavity of the rocker beam 1. In some embodiments, the first connecting face 131 of the reinforcement plate 13 is connected to the bottom wall 101 of the rocker beam 1, for example, the first connecting face 131 of the reinforcement plate 13 is connected, in a blind riveting manner, to the bottom wall 101 of the rocker beam 1 via a blind rivet 134. A plurality of nuts 133 are mounted on the second connecting face 132 of the reinforcement plate 13, and the plurality of nuts 133 may be connected to the second connecting face 13 of the reinforcement plate 13 by means of press-riveting, for example. The bolts can pass through the through-holes 22 at the connecting portion 21 of the rear longitudinal rail 2 from a rear portion of the connecting portion 21 in the direction of arrow B, and then pass through the corresponding through-holes in the front wall 102 of the rocker beam 1, are received by the plurality of nuts 133 on the second connecting face 132 of the reinforcement plate 13, such that the rocker beam 1 and the rear longitudinal rail 2 are connected together via the plurality of bolts. In an alternative embodiment, the first connecting face 131 of the reinforcement plate 13 may also be connected to the top wall 103, or the front wall 102 or the rear wall 104. In this case, the reinforcement plate 13 should have a shape different from this embodiment. In some embodiments, an additional nut 14 is further mounted on the front wall 102 of the rocker beam 1, for example, being connected to the front wall 102 of the rocker beam 1 by means of blind riveting in the direction of arrow R. An additional bolt can pass through an additional through-hole 23 at the connecting portion 21 of the rear longitudinal rail 2 from the rear portion of the connecting portion 21 in the direction of arrow B and is received by the additional nut 14 that is blind riveted on the front wall 102 of the rocker beam 1, thereby providing additional reinforcement between the rocker beam 1 and the rear longitudinal rail 2. Although in the illustrated embodiment, it is shown that there are two sets of four bolts connected to the reinforcement plate 13 and two additional bolts connected to the additional nuts 14, in alternative embodiments, the numbers and positions of the bolts and the additional bolts may be changed as needed.

In some embodiments, the rear longitudinal rail 2 is formed by means of casting, the rear longitudinal rail 2 may be a cast member, and the through-holes 22 and the additional through-holes 23 of the connecting portion 21 of the rear longitudinal rail 2 are produced during casting. In some embodiments, the rear longitudinal rail 2 is cast from an aluminium alloy material. The rear portion 22 of the rear longitudinal rail 2 may be used for connecting to a rear bumper beam (not shown). In some embodiments, the rear portion of the rear longitudinal rail 2 comprises a groove 22, and a rear longitudinal rail reinforcement member in the form of an energy absorption box can be inserted into the groove 22 and then connected to the rear bumper beam.

In some embodiments, the rocker beam 1 and the rear longitudinal rail 2 may be further reinforced at other suitable overlapping positions therebetween by means of self-tapping rivets. In some embodiments, the rocker beam 1 and the rear longitudinal rail 2 may be further reinforced at an overlapping position therebetween by using a self-tapping rivet above a bolt connection area, thereby realizing triple connection between the rocker beam 1 and the rear longitudinal rail 2 to achieve a reliable and firm connection, and ensuring the rear impact and side impact performances, and sufficient bending stiffness and torsional stiffness of the vehicle, to improve the reliability and safety of the whole vehicle.

In another aspect, the invention also aims to set forth a vehicle body assembly, comprising a side rear vehicle body assembly according to various embodiments.

In another aspect, the invention also aims to set forth a vehicle, comprising a vehicle body assembly according to various embodiments.

In another aspect, the invention also aims to set forth a method for connecting a rocker beam to a further component such as a rear longitudinal rail, the method comprising: providing a reinforcement plate 13; inserting the reinforcement plate 13 into an accommodating cavity of the rocker beam 1 from an open end 11 of the rocker beam 1, and connecting a first connecting face 131 of the reinforcement plate 13 to an inner side of a side wall of the rocker beam 1; and a plurality of bolts passing through through-holes 22 of a connecting end 21 of the rear longitudinal rail 2 and apertures in the side wall of the rocker beam, and being screwed into nuts 133 mounted on a second connecting face of the reinforcement plate.

In some embodiments, the method further comprises connecting the first connecting face 131 of the reinforcement plate 13 to a bottom wall 101 of the rocker beam, and the plurality of bolts passing through a front wall 102 of the rocker beam and being screwed into the nuts 133 on the second connecting face 132 of the reinforcement plate 13. In some embodiments, the method further comprises connecting the first connecting face 131 of the reinforcement plate 13 to the bottom wall 101 of the rocker beam by means of blind riveting. In some embodiments, the method further comprises connecting the plurality of nuts 133 to the second connecting face 132 of the reinforcement plate by means of press-riveting. In some embodiments, the method further comprises connecting an additional nut 14 to the front wall 102 of the rocker beam in a blind riveting manner, and the additional bolt passing through an additional through-hole 23 of the connecting end 21 of the rear longitudinal rail and being screwed into an additional nut 14 on the front wall 102. In some embodiments, the method further comprises reinforcing the rocker beam and the rear longitudinal rail at an overlapping position therebetween by means of a self-tapping rivet. In some embodiments, the specific installation sequence may be as follows: first, press-riveting the nuts 133 onto the second connecting face 132 of the reinforcement plate 13, then inserting the reinforcement plate mounted with the nuts 133 into the accommodating cavity of the rocker beam 1 from the end 11 thereof, connecting the reinforcement plate to the bottom wall 101 of the rocker beam 1 by means of blind riveting, connecting the additional nut 14 to the front wall 102 of the rocker beam 1 in a press-riveting manner, the bolts and the additional bolt passing through the through-holes 22, 23 of the connecting end 21 of the rear longitudinal rail and being screwed into the nuts 133 and the additional nut 14, respectively, and then further reinforcing the rocker beam and the rear longitudinal rail at an overlapping position therebetween by means of a self-tapping rivet above the bolt connection area. The connection way in the method according to the above embodiments is simple and easy to operate.

The particular embodiments described above are intended merely to more clearly describe the principles of the invention, in which each component is clearly shown or described in order to facilitate a better understanding of the principles of the invention. Various modifications or variations of the invention could be readily made by those skilled in the art as long as they do not depart from the scope of the invention defined by the appended claims. It should therefore be understood that such modifications or variations are intended to be included within the scope of protection of the invention, which is solely defined by the appended claims.

## Claims

1. A rocker beam assembly, comprising a rocker beam (1) and a reinforcement plate (13),
wherein the rocker beam is an extruded member, which comprises a side wall (10) defining an accommodating cavity, and two open ends (11, 12);
**characterized in that** the reinforcement plate is inserted into the accommodating cavity of the rocker beam from either of the two open ends;
the reinforcement plate comprises a first connecting face (131) connected to an inner side of the side wall of the rocker beam, and a second connecting face (132) used for connecting to a further component; and nuts (133) are mounted on the second connecting face, and the side wall of the rocker beam is provided with a plurality of apertures positioned corresponding to the nuts of the reinforcement plate.

2. The rocker beam assembly according to claim 1, **characterized in that** the reinforcement plate comprises the first connecting face and the second connecting face formed at an angle.

3. The rocker beam assembly according to claim 2, **characterized in that** the first connecting face and the second connecting face of the reinforcement plate are perpendicular to each other.

4. The rocker beam assembly according to claim 1, **characterized in that** the side wall of the rocker beam comprises a bottom wall (101), a top wall (103), a front wall (102) and a rear wall (104), the first connecting face of the reinforcement plate is connected to the bottom wall of the rocker beam, and the plurality of apertures are provided in the front wall of the rocker beam.

5. The rocker beam assembly according to claim 4, **characterized in that** the first connecting face of the reinforcement plate is connected to the bottom wall of the rocker beam by means of blind riveting.

6. The rocker beam assembly according to claim 4, **characterized in that** a plurality of nuts are connected to the second connecting face of the reinforcement plate in a press-riveting manner.

7. A side rear vehicle body assembly, **characterized by** comprising a rocker beam assembly according to any one of claims 1-6 and a rear longitudinal rail (2),
wherein the rear longitudinal rail comprises a connecting end (21),
end, and a plurality of bolts pass through through-holes of the connecting end of the rear longitudinal rail and the apertures in the side wall of the rocker beam, and are received by the nuts (133) mounted on the second connecting face of the reinforcement plate.

8. The side rear vehicle body assembly according to claim 7, **characterized in that** the first connecting face of the reinforcement plate is connected to the bottom wall of the rocker beam, and the plurality of bolts pass through the front wall of the rocker beam and are received by the nuts on the second connecting face of the reinforcement plate.

9. The side rear vehicle body assembly according to claim 7 or 8, **characterized in that** an additional nut (14) is further connected to the front wall of the rocker beam in a blind riveting manner, and the additional bolt passes through an additional through-hole of the connecting end of the rear longitudinal rail and is received by an additional nut on the front wall.

10. The side rear vehicle body assembly according to claim 7 or 8, **characterized in that** an overlapping position is further provided between the rocker beam and the rear longitudinal rail, and the rocker beam and the rear longitudinal rail are reinforced by means of a self-tapping rivet at the overlapping position.

11. The side rear vehicle body assembly according to claim 7 or 8, **characterized in that** the rear longitudinal rail is a cast member, and the through-hole in the connecting end of the rear longitudinal rail is formed during casting.

12. A method for connecting a rocker beam (1) to a further component, **characterized by**
comprising:
providing a reinforcement plate (13), the reinforcement plate comprising a first connecting face (131) configured to be connected to an inner side of a side wall of the rocker beam, and a second connecting face (132) configured to be connected to the further component, and nuts (133) being mounted on the second connecting face of the reinforcement plate;
inserting the reinforcement plate from an open end of the rocker beam into an accommodating cavity of the rocker beam, the rocker beam being an extruded part, which comprises the side wall defining the accommodating cavity and two open ends;
connecting the first connecting face of the reinforcement plate to the inner side of the side wall of the rocker beam; and
a plurality of bolts passing through through-holes (22) of a connecting end of the further component and apertures in the side wall of the rocker beam, and being screwed into nuts mounted on the second connecting face of the reinforcement plate.

13. The method according to claim 12, **characterized in that** the side wall (10) of the rocker beam (1) comprises a bottom wall (101), a top wall (103), a front wall (102) and a rear wall (104), and the method further comprises connecting the first connecting face of the reinforcement plate (13) to the bottom wall of the rocker beam, and the plurality of bolts passing through the front wall of the rocker beam and being screwed into the nuts (133) on the second connecting face (132) of the reinforcement plate.

14. The method according to claim 13, **characterized by** comprising connecting the first connecting face of the reinforcement plate to the bottom wall of the rocker beam by means of blind riveting.

15. The method according to claim 13, **characterized by** comprising connecting a plurality of nuts to the second connecting face of the reinforcement plate by means of press-riveting.

## Patentansprüche

1. Schwellerträgeranordnung, umfassend einen Schwellerträger (1) und eine Verstärkungsplatte (13), wobei der Schwellerträger ein extrudiertes Element ist, das eine Seitenwand (10), die einen Aufnahmehohlraum definiert, und zwei offene Enden (11, 12) umfasst; **dadurch gekennzeichnet, dass** die Verstärkungsplatte in den Aufnahmehohlraum des Schwellerträgers von einem der zwei offenen Enden eingesetzt ist; wobei die Verstärkungsplatte eine erste Verbindungsfläche (131), die mit einer Innenseite der Seitenwand des Schwellerträgers verbunden ist, und eine zweite Verbindungsfläche (132), die zum Verbinden mit einer weiteren Komponente verwendet wird, umfasst; und wobei Muttern (133) an der zweiten Verbindungsfläche angebracht sind und die Seitenwand des Schwellerträgers mit einer Mehrzahl von Öffnungen versehen ist, die entsprechend zu den Muttern der Verstärkungsplatte positioniert sind.

2. Schwellerträgeranordnung nach Anspruch 1, **dadurch gekennzeichnet, dass** die Verstärkungsplatte die erste Verbindungsfläche und die zweite Verbindungsfläche umfasst, die in einem Winkel ausgebildet sind.

3. Schwellerträgeranordnung nach Anspruch 2, **dadurch gekennzeichnet, dass** die erste Verbindungsfläche und die zweite Verbindungsfläche der Verstärkungsplatte senkrecht zueinander sind.

4. Schwellerträgeranordnung nach Anspruch 1, **dadurch gekennzeichnet, dass** die Seitenwand des Schwellerträgers eine untere Wand (101), eine obere Wand (103), eine vordere Wand (102) und eine hintere Wand (104) umfasst, wobei die erste Verbindungsfläche der Verstärkungsplatte mit der unteren Wand des Schwellerträgers verbunden ist und die Mehrzahl von Öffnungen in der vorderen Wand des Schwellerträgers bereitgestellt sind.

5. Schwellerträgeranordnung nach Anspruch 4, **dadurch gekennzeichnet, dass** die erste Verbindungsfläche der Verstärkungsplatte mit der unteren Wand des Schwellerträgers mittels Blindnieten verbunden ist.

6. Schwellerträgeranordnung nach Anspruch 4, **dadurch gekennzeichnet, dass** eine Mehrzahl von Muttern mit der zweiten Verbindungsfläche der Verstärkungsplatte in einer Pressnietungsart verbunden sind.

7. Seitliche hintere Fahrzeugkarosserieanordnung, **dadurch gekennzeichnet, dass** sie eine Schwellerträgeranordnung nach einem der Ansprüche 1-6 und eine hintere Längsschiene (2) umfasst, wobei die hintere Längsschiene ein Verbindungsende (21) und eine Mehrzahl von Bolzen umfasst, die durch Durchgangslöcher des Verbindungsendes der hinteren Längsschiene und die Öffnungen in der Seitenwand des Schwellerträgers verlaufen und von den Muttern (133), die an der zweiten Verbindungsfläche der Verstärkungsplatte angebracht sind, aufgenommen sind.

8. Seitliche hintere Fahrzeugkarosserieanordnung nach Anspruch 7, **dadurch gekennzeichnet, dass** die erste Verbindungsfläche der Verstärkungsplatte mit der unteren Wand des Schwellerträgers verbunden ist und die Mehrzahl von Bolzen durch die vordere Wand des Schwellerträgers verlaufen und von den Muttern an der zweiten Verbindungsfläche der Verstärkungsplatte aufgenommen sind.

9. Seitliche hintere Fahrzeugkarosserieanordnung nach Anspruch 7 oder 8, **dadurch gekennzeichnet, dass** eine zusätzliche Mutter (14) ferner mit der vorderen Wand des Schwellerträgers in einer Blindnietungsart verbunden ist und der zusätzliche Bolzen durch ein zusätzliches Durchgangsloch des Verbindungsendes der hinteren Längsschiene verläuft und von einer zusätzlichen Mutter an der vorderen Wand aufgenommen ist.

10. Seitliche hintere Fahrzeugkarosserieanordnung nach Anspruch 7 oder 8, **dadurch gekennzeichnet, dass** eine Überlagerungsposition ferner zwischen dem Schwellerträger und der hinteren Längsschiene bereitgestellt ist und der Schwellerträger und die hintere Längsschiene mittels eines selbstschneidenden Niets an der Überlagerungsposition verstärkt sind.

11. Seitliche hintere Fahrzeugkarosserieanordnung nach Anspruch 7 oder 8, **dadurch gekennzeichnet, dass** die hintere Längsschiene ein gegossenes Element ist und das Durchgangsloch in dem Verbindungsende der hinteren Längsschiene während des Gießens ausgebildet wird.

12. Verfahren zum Verbinden eines Schwellerträgers (1) mit einer weiteren Komponente, **dadurch gekennzeichnet, dass** es Folgendes umfassend:
Bereitstellen einer Verstärkungsplatte (13), wobei die Verstärkungsplatte eine erste Verbindungsfläche (131), die dazu ausgelegt ist, mit einer Innenseite einer Seitenwand des Schwellerträgers verbunden zu werden, und eine zweite Verbindungsfläche (132), die dazu ausgelegt ist, mit der weiteren Komponente verbunden zu werden, und Muttern (133), die an der zweiten Verbindungsfläche der Verstärkungsplatte angebracht sind, umfasst;
Einsetzen der Verstärkungsplatte von einem offenen Ende des Schwellerträgers in einen Aufnahmehohlraum des Schwellerträgers, wobei der Schwellerträger ein extrudiertes Teil ist, das die Seitenwand, die den Aufnahmehohlraum definiert, und zwei offene Enden umfasst;
Verbinden der ersten Verbindungsfläche der Verstärkungsplatte mit der Innenseite der Seitenwand des Schwellerträgers; und
wobei eine Mehrzahl von Bolzen durch Durchgangslöcher (22) eines Verbindungsendes der weiteren Komponente und Öffnungen in der Seitenwand des Schwellerträgers verlaufen und in Muttern, die an der zweiten Verbindungsfläche der Verstärkungsplatte angebracht sind, geschraubt sind.

13. Verfahren nach Anspruch 12, **dadurch gekennzeichnet, dass** die Seitenwand (10) des Schwellerträgers (1) eine untere Wand (101), eine obere Wand (103), eine vordere Wand (102) und eine hintere Wand (104) umfasst und das Verfahren ferner Verbinden der ersten Verbindungsfläche der Verstärkungsplatte (13) mit der unteren Wand des Schwellerträgers umfasst und die Mehrzahl von Bolzen durch die vordere Wand des Schwellerträgers verlaufen und in die Muttern (133) an der zweiten Verbindungsfläche (132) der Verstärkungsplatte geschraubt werden.

14. Verfahren nach Anspruch 13, **dadurch gekennzeichnet, dass** es Verbinden der ersten Verbindungsfläche der Verstärkungsplatte mit der unteren Wand des Schwellerträgers mittels Blindnieten umfasst.

15. Verfahren nach Anspruch 13, **dadurch gekennzeichnet, dass** es Verbinden einer Mehrzahl von Muttern mit der zweiten Verbindungsfläche der Verstärkungsplatte mittels Pressnieten umfasst.

## Revendications

1. Ensemble longeron de seuil, comprenant un longeron de seuil (1) et une plaque de renfort (13),
le longeron de seuil étant un élément extrudé, qui comprend une paroi latérale (10) définissant une cavité de réception, et deux extrémités ouvertes (11, 12) ;
**caractérisé en ce que** la plaque de renfort est insérée dans la cavité de réception du longeron de seuil à partir de l'une ou l'autre des deux extrémités ouvertes ;
la plaque de renfort comprend une première face de liaison (131) reliée à un côté intérieur de la paroi latérale du longeron de seuil, et une seconde face de liaison (132) utilisée à des fins de liaison à un autre composant ; et
des écrous (133) sont montés sur la seconde face de liaison, et la paroi latérale du longeron de seuil est pourvue d'une pluralité d'ouvertures positionnées en correspondance avec les écrous de la plaque de renfort.

2. Ensemble longeron de seuil selon la revendication 1, **caractérisé en ce que** la plaque de renfort comprend la première face de liaison et la seconde face de liaison formées selon un angle.

3. Ensemble longeron de seuil selon la revendication 2, **caractérisé en ce que** la première face de liaison et la seconde face de liaison de la plaque de renfort sont perpendiculaires l'une à l'autre.

4. Ensemble longeron de seuil selon la revendication 1, **caractérisé en ce que** la paroi latérale du longeron de seuil comprend une paroi inférieure (101), une paroi supérieure (103), une paroi avant (102) et une paroi arrière (104), la première face de liaison de la plaque de renfort étant reliée à la paroi inférieure du longeron de seuil, et la pluralité d'ouvertures étant fournies dans la paroi avant du longeron de seuil.

5. Ensemble longeron de seuil selon la revendication 4, **caractérisé en ce que** la première face de liaison de la plaque de renfort est reliée à la paroi inférieure du longeron de seuil par rivetage aveugle.

6. Ensemble longeron de seuil selon la revendication 4, **caractérisé en ce qu'**une pluralité d'écrous sont reliés à la seconde face de liaison de la plaque de renfort par rivetage par pression.

7. Ensemble corps de véhicule arrière latéral, **caractérisé en ce qu'**il comprend un ensemble longeron de seuil selon l'une quelconque des revendications 1 à 6 et un rail longitudinal arrière (2), le rail longitudinal arrière comprenant une extrémité de liaison (21), et une pluralité de boulons passent à travers des trous traversants de l'extrémité de liaison du rail longitudinal arrière et les ouvertures dans la paroi latérale du longeron de seuil, et sont reçus par les écrous (133) montés sur la seconde face de liaison de la plaque de renfort.

8. Ensemble corps de véhicule arrière latéral selon la revendication 7, **caractérisé en ce que** la première face de liaison de la plaque de renfort est reliée à la paroi inférieure du longeron de seuil, et la pluralité de boulons passent à travers la paroi avant du longeron de seuil et sont reçus par les écrous sur la seconde face de liaison de la plaque de renfort.

9. Ensemble corps de véhicule arrière latéral selon la revendication 7 ou 8, **caractérisé en ce qu'**un écrou supplémentaire (14) est en outre relié à la paroi avant du longeron de seuil par rivetage aveugle, et le boulon supplémentaire traverse un trou traversant supplémentaire de l'extrémité de liaison du longeron arrière et est reçu par un écrou supplémentaire sur la paroi avant.

10. Ensemble corps de véhicule arrière latéral selon la revendication 7 ou 8, **caractérisé en ce qu'**une position de chevauchement se trouve en outre entre le longeron de seuil et le rail longitudinal arrière, et le longeron de seuil et le rail longitudinal arrière sont renforcés au moyen d'un rivet autotaraudeur au niveau de la position de chevauchement.

11. Ensemble corps de véhicule arrière latéral selon la revendication 7 ou 8, **caractérisé en ce que** le rail longitudinal arrière est un élément moulé, et le trou traversant dans l'extrémité de liaison du rail longitudinal arrière est formé pendant le moulage.

12. Procédé pour relier un longeron de seuil (1) à un autre composant, **caractérisé en ce qu'**il comprend les étapes consistant à :
fournir une plaque de renfort (13), la plaque de renfort comprenant une première face de liaison (131) conçue pour être reliée à un côté intérieur d'une paroi latérale du longeron de seuil, et une seconde face de liaison (132) conçue pour être reliée à l'autre composant, et des écrous (133) étant montés sur la seconde face de liaison de la plaque de renfort ;
insérer la plaque de renfort à partir d'une extrémité ouverte du longeron de seuil dans une cavité de réception du longeron de seuil, le longeron de seuil étant une pièce extrudée, qui comprend la paroi latérale définissant la cavité de réception et deux extrémités ouvertes ;
relier la première face de liaison de la plaque de renfort au côté intérieur de la paroi latérale du longeron de seuil ; et
une pluralité de boulons passant à travers des trous traversants (22) d'une extrémité de liaison de l'autre composant et des ouvertures dans la paroi latérale du longeron de seuil, et étant vissés dans des écrous montés sur la seconde face de liaison de la plaque de renfort.

13. Procédé selon la revendication 12, **caractérisé en ce que** la paroi latérale (10) du longeron de seuil (1) comprend une paroi inférieure (101), une paroi supérieure (103), une paroi avant (102) et une paroi arrière (104), et le procédé comprenant en outre l'étape consistant à relier la première face de liaison de la plaque de renfort (13) à la paroi inférieure du longeron de seuil, et la pluralité de boulons passant à travers la paroi avant du longeron de seuil et étant vissés dans les écrous (133) sur la seconde face de liaison (132) de la plaque de renfort.

14. Procédé selon la revendication 13, **caractérisé en ce qu'**il comprend l'étape consistant à relier la première face de liaison de la plaque de renfort à la paroi inférieure du longeron de seuil par rivetage aveugle.

15. Procédé selon la revendication 13, **caractérisé en ce qu'**il comprend l'étape consistant à relier une pluralité d'écrous à la seconde face de liaison de la plaque de renfort par rivetage par pression.
